# EUROPÄISCHE PATENTANMELDUNG

(11) **EP 2 159 388 A1**
(43) Veröffentlichungstag der Anmeldung: **03.03.2010**
(21) Anmeldenummer: 08015272.1
(22) Anmeldetag: 29.08.2008
(51) Int. Cl.: F01N 3/035, C22C 21/00, B01D 53/94

(54) **Verfahren zur Herstellung eines Katalysators und/oder Partikelabscheiders aus einem Legierungswerkstoff mit Aluminium- und Chromanteilen, sowie dieser Legierungswerkstoff und dessen Verwendung**

(71) Anmelder: Oberland Mangold GmbH, 82438 Eschenlohe (DE)
(72) Erfinder: Mangold, Anton, 82438 Eschenlohe (DE)
(74) Vertreter: Lang, Friedrich

(57) **Zusammenfassung**

Die Erfindung betriff ein Verfahren zur Herstellung eines Katalysators (katalytischen Konverters) und/oder Partikelabscheiders (Diesel-Partikelfilters) aus einem metallischen Legierungswerkstoff, der im Wesentlichen die Legierungselement-Anteile Aluminium und Chrom aufweist. Die Erfindung betrifft weiterhin einen solchen metallischen Legierungswerkstoff und dessen bevorzugte Verwendungen.

## Beschreibung

Die Erfindung betrifft ein Verfahren zur Herstellung eines Katalysators (katalytische Konverter) und/oder eines Partikelabscheiders (Diesel-Partikelfilters), vorzugsweise zur Verwendung im Bereich der katalytischen Reinigung von gasförmigen Schadstoffen sowie Russpartikeln in den Abgasen von Verbrennungskraftmaschinen, insbesondere im Bereich des Fahrzeugbaus. Die Erfindung betrifft weiterhin einen metallischen Legierungswerkstoff mit den Legierungselement-Anteilen Aluminium und Chrom. Die Erfindung betrifft fernerhin bevorzugte Verwendungen eines solchen metallischen Legierungswerkstoffes.

Aus dem Stand der Technik sind Katalysatoren und/oder Partikelabscheider bekannt, zur Reduzierung bzw. Verminderung von Abgaskomponenten wie insbesondere CO, HC, NOₓ und Festpartikel (insbesondere Russpartikel). Solche Katalysatoren und/oder Partikelabscheider sind bspw. als metallische Träger mit Strömungskanälen für die Abgase ausgebildet. Bekannt sind metallische Träger, insbesondere Wabenkörper, die aus mehreren Lagen dünner, zumindest teilweise geprägter Metallfolien gebildet sind und eine Beschichtung aufweisen (Washcoat), welche der Oberflächenvergrößerung und der Aufnahme von Edelmetallkomponenten dient. Diese Katalysatoren und/oder Partikelabscheider bzw. die zuvor genannten Träger sind im Wesentlichen aus Edelstählen gebildet. Nachteilig hierbei ist ein relativ hohes Gewicht und eine physikalisch gegebene Temperaturträgheit.

Aufgabe der Erfindung ist es, eine technische Möglichkeit aufzuzeigen, um einen leichten und bevorzugt auch thermisch reaktionsschnellen Katalysator (insbesondere einen katalytischen Konverter) und/oder Partikelabscheider (insbesondere einen Diesel-Partikelfilter) bereit zu stellen.

Diese Aufgabe wird gelöst durch ein Verfahren mit den Merkmalen des Anspruches 1. Diese Aufgabe wird weiterhin gelöst durch einen metallischen Legierungswerkstoff gemäß den Merkmalen des nebengeordneten Patentanspruches. Vorteilhafte und bevorzugte Weiterbildungen sind Gegenstand der jeweils abhängigen Ansprüche. Die Aufgabe wird fernerhin gelöst durch die angegebene Vielzahl von Anwendungsmöglichkeiten und Verwendungen für den erfindungsgemäßen metallischen Legierungswerkstoff.

Zur Lösung der Aufgabe wird ein Verfahren zur Herstellung eines katalytischen Konverters (catalytic converter) und/oder Diesel-Partikelfilters vorgeschlagen, wobei dieser katalytische Konverter und/oder Diesel-Partikelfilter vorzugsweise zur Verwendung im Bereich der katalytischen Reinigung von gasförmigen Schadstoffen sowie Russpartikeln in den Abgasen von Verbrennungskraftmaschinen, insbesondere im Bereich des Fahrzeugbaus bzw. Automobilbaus, vorgesehen ist.

Das erfindungsgemäße Verfahren dient insbesondere der Herstellung eines metallischen Trägers der eingangs genannten Art, der aus dem bereitgestellten metallischen Legierungswerkstoff im Wesentlichen gebildet ist bzw. daraus hergestellt wird.

Das erfindungsgemäße Verfahren umfasst zumindest den folgenden Schritt: Bereistellen eines metallischen Legierungswerkstoffes der in etwa einen Legierungsgrundelement-Anteil Aluminium von 60 Gew.-% und einen Legierungsgrundelement-Anteil Chrom von ca. 40 Gew.-%, aufweist. Weiterhin ist je Legierungsgrundelement-Anteil ein variabler Toleranzbereich von bis zu ± 40 Gew.-% vorgesehen, so dass je nach konkretem Anwendungsbereich bzw. Einsatzgebiet und somit je nach zu erwartender mechanischer und/oder thermischer Anforderung an den katalytischen Konverter, der Legierungswerkstoff in seiner Zusammensetzung innerhalb dieser Toleranzbereiche abgestimmt werden kann, wobei der Legierungselement-Anteil von Aluminium immer über dem Legierungselement-Anteil von Chrom liegt, und sich somit durch den variablen Toleranzbereich beider Legierungselemente von bis zu ± 40 % eine Legierungszusammensetzung ergibt, deren Aluminiumanteile innerhalb einer Bandbreite von 51 Gew.- % bis 76 Gew.- % und deren die Schmelze ausgleichenden Chromanteile im Bereich von 24 Gew.- % bis 49 Gew.- % liegen können.

Bevorzugt ist somit vorgesehen, dass dieser metallische Legierungswerkstoff mehrheitlich aus Aluminium-Anteilen und Chrom-Anteilen besteht (wobei der Aluminiumanteil immer über dem Chromanteil liegt). Dieser metallische Legierungswerkstoff unterscheidet sich von den herkömmlichen, aus den Legierungselementen Aluminium und Chrom hergestellten Legierungswerkstoffen bzw. Materialien aufgrund seiner hiervon abweichenden Massenverhältnisse. Ein solcher metallischer Legierungswerkstoff ist auf Grund des hohen Aluminiumanteils gegenüber den bisher eingesetzten Werkstoffen bzw. Materialien leichter und weist daneben eine hohe und/oder dauerhafte Korrosionsbeständigkeit auf, und vor allem eine hohe mechanische und thermische Festigkeit, sowie eine hohe thermische Leitfähigkeit, was im Ergebnis das thermische Reaktionsvermögen des katalytischen Konverters und/oder Diesel-Partikelfilters verbessert und somit dessen Reaktivität sowie dessen Wirkungsgrad erhöht.

Gemäß einer Weiterbildung des erfindungsgemäßen Verfahrens ist vorgesehen, dass der metallische Legierungswerkstoff aus einer Schmelze derselben Zusammensetzung gewonnen wird. Bevorzugt ist vorgesehen, dass je nach Anwendungsbereich und somit je nach mechanischer und/oder thermischer Anforderung an den Legierungswerkstoff die Schmelze in ihrer Zusammensetzung innerhalb der o.g. Toleranz-Grenzen abgestimmt wird. Bevorzugt ist zudem vorgesehen, dass diese Schmelze mit geläufigen Aluminiumguss-Verfahren (insbesondere Druckguss, Blockguss und/oder Strangguss) zunächst zu Vorerzeugnis-Produkten (Halbzeuge) verarbeitet wird, vorzugsweise zu Blechen, Dünnblechen und Profilen und insbesondere zu Endlos-Bandfolien. Weiterhin ist bevorzugt vorgesehen, dass anschließend ein Weiterverarbeiten dieser Halbzeuge erfolgt, insbesondere das Auspräge bzw. Ausbilden einer Matrix für wenigstens einen Wabenkörper für einen katalytischen Konverter und/oder Diesel-Partikelfilter.

Weiterhin ist bevorzugt vorgesehen, dass, vorzugsweise im Anschluss an den zuvor beschriebenen Schritt, der metallische Legierungswerkstoff zu einer offenen Partikelfilterstruktur ausgeformt wird. Eine solche offene Partikelfilterstruktur ist aufgrund der besonders hohen thermischen Wärmeleitfähigkeit des metallischen Legierungswerkstoffs insbesondere für das Beseitigen von Russ-Partikeln aus dem Abgas einer Verbrennungskraftmaschine geeignet.

Der erfindungsgemäße metallische Legierungswerkstoff ist insbesondere ein Schmelzlegierungswerkstoff, gekennzeichnet durch einen Legierungselement-Anteil Aluminium von 51 Gew.-% bis 76 Gew.-% und einen Legierungselement-Anteil Chrom von 24 Gew.-% bis 49 Gew.-%, wobei der Legierungselement-Anteil von Aluminium immer über dem Legierungselement-Anteil von Chrom liegt.

Dieser metallische Legierungswerkstoff unterscheidet sich von den herkömmlichen, aus den Legierungselementen Aluminium und Chrom hergestellten Legierungswerkstoffen bzw. Materialien aufgrund seiner hiervon abweichenden Massenverhältnisse. Ein solcher metallischer Legierungswerkstoff ist gegenüber den bisher eingesetzten Werkstoffen bzw. Materialien leichter und weist daneben eine hohe und/oder dauerhafte Korrosionsbeständigkeit auf, und vor allem eine hohe mechanische und thermische Festigkeit, sowie eine hohe thermische Leitfähigkeit.

Insbesondere ist vorgesehen, dass dieser metallische Legierungswerkstoff einen Legierungsgrundelement-Anteil Aluminium von in etwa 60 Gew.-% und einen Legierungsgrundelement-Anteil Chrom von in etwa 40 Gew.-% aufweist.
Eine solche Zusammensetzung hat sich hinsichtlich der zuvor beschriebenen Eigenschaften als besonders vorteilhaft erwiesen. Die Angabe "in etwa" schließt die beim Herstellen eines Legierungswerkstoffes, insbesondere aus einer Schmelze, üblichen Toleranzen für die einzelnen Legierungselement-Anteile mit ein.

Der erfindungsgemäße metallische Legierungswerkstoff kann für eine Vielzahl von Anwendungsbereichen eingesetzt werden. Bevorzugt ist jedoch die Verwendung im Bereich des Fahrzeugbaus, insbesondere dem Automobilbau.

So ist insbesondere die Verwendung als Leichtbauwerkstoff im Bereich des Fahrzeugbaus bzw. Automobilbau vorgesehen, um damit eine Gewichtsreduzierung der daraus hergestellten Bauteile gegenüber den herkömmlich eingesetzten Materialien zu ermöglichen. Da der metallische Legierungswerkstoff überwiegend aus einem Aluminium-Anteil besteht kann je nach Anwendungsbereich eine Gewichtsreduzierung der daraus hergestellten Bauteile bzw. Komponenten um bis zu 50 % gegenüber den herkömmlich eingesetzten Materialien ermöglicht werden. Je mehr Fahrzeugteile aus dem erfindungsgemäßen metallischen Legierungswerkstoff hergestellt werden, desto mehr verringert sich das Leergewicht eine Fahrzeuges. Weniger Gewicht bedeutet aber auch weniger Kraftstoffverbrauch und somit weniger Ausstoß von Kohlendioxid (CO₂) und anderen Abgasschadstoffen, was letztlich der Umwelt und auch dem Menschen zugute kommt.

Im Speziellen ist die Verwendung des erfindungsgemäßen metallischen Legierungswerkstoffes im Bereich des Fahrzeugbaus bzw. Automobilbaus vorgesehen (wie oben bereits erläutert), und zwar vorzugsweise zur Herstellung von Motor-Abgaskrümmern, Abgasanlagen, Schalldämpfern und Abgasreinigungssystemen für Verbrennungskraftmaschinen, und insbesondere für Reinigungsanwendungen für die Abgase von mit Diesel betriebenen, selbstzündenden Verbrennungskraftmaschinen. Hier kommt der bereits oben beschriebene Vorteil zugute, dass der erfindungsgemäße metallische Legierungswerkstoff eine besonders hohe thermische Wärmeleitfähigkeit, aber auch eine verhältnismäßig geringe Wärmekapazität besitzt, was zu einem außergewöhnlich schnellen Erreichen der Betriebstemperatur (sog. "Light off"-Temperatur) und somit zur vorzeitigen Aktivierung (bezogen auf bisherige Lösungen) des Abgasreinigungssystems führt, wodurch dessen Reaktivität und somit dessen Wirkungsgrad wesentlich erhöht wird. Dies wirkt sich insbesondere vorteilhaft bei der Reinigung der Abgase eines Dieselmotors aus, da die Abgastemperaturen von Dieselmotoren prozessbedingt ohnehin niedriger sind als die Abgastemperaturen von Ottomotoren. Vor allem bei Teillast, wie z.B. im Stadtverkehr, oder in Bereichen des Abgasstranges, die vom Motor weiter entfernt liegen, wurden bisher, bedingt durch die mechanische Trägheit (wie eingangs erläutert) die erforderlichen Betriebstemperaturen nicht oder nicht schnell genug erreicht. Dies führte vor allem bei Kaltstarts und dynamischen Lastsprüngen zu Schwierigkeiten hinsichtlich der Abgasreinigung.

In Anlehnung an die vorausgegangen Ausführungen ist daher insbesondere die Verwendung des erfindungsgemäßen metallischen Legierungswerkstoffes zur Bildung eines katalytischen Konverters und/oder Diesel-Partikelfilter zur Verwendung im Bereich der katalytischen Reinigung von gasförmigen Schadstoffen sowie im Speziellen von Russpartikeln in den Abgasen von Verbrennungskraftmaschinen, im Speziellen mit Diesel betriebenen Verbrennungskraftmaschinen, bevorzugt. Jeweils insbesondere im Bereich des Fahrzeugbaus bzw. Automobilbaus.

Weiterhin bevorzugt ist die Verwendung des erfindungsgemäßen metallischen Legierungswerkstoffes für Bauteile bzw. Komponenten, vorzugsweise im Bereich des Fahrzeugbaus, die eine dauerhafte Korrosionsbeständigkeit über deren gesamte Lebensdauer erfordern bzw. besitzen sollen. Ebenso bevorzugt ist die Verwendung in Abgasreinigungs-systemen für eine Verbrennungskraftmaschine, als kostengünstigere Alternative zu den herkömmlich eingesetzten Materialien bzw. Werkstoffen.

## Patentansprüche

1. Verfahren zur Herstellung eines katalytischen Konverters und/oder Diesel-Partikelfilters zur Verwendung im Bereich der katalytischen Reinigung von gasförmigen Schadstoffen sowie Russpartikeln in den Abgasen von Verbrennungskraftmaschinen, insbesondere im Bereich des Fahrzeugbaus,
**dadurch gekennzeichnet, dass**
hierfür ein metallischer Legierungswerkstoff bereitgestellt wird, welcher einen Legierungsgrundelement-Anteil Aluminium von 60 Gew.- % und einen Legierungs-grundelement-Anteil Chrom von in etwa 40 Gew.- % aufweist, wobei für beide Legierungsgrundelement-Anteile ein zusätzlicher variabler Toleranzbereich von bis zu ± 40 % vorgesehen ist, so dass je nach Anwendungsbereich und somit je nach zu erwartender mechanischer und/oder thermischer Anforderung an den katalytischen Konverter, der Legierungswerkstoff in seiner Zusammensetzung innerhalb dieses Toleranzbereichs abgestimmt werden kann, wobei der Legierungselement-Anteil von Aluminium immer über dem Legierungselement-Anteil von Chrom liegen muss und somit auf Grund des variablen Toleranzbereichs beider Legierungselemente von bis zu ± 40 %, Legierungszusammensetzungen entstehen, deren Aluminiumanteile innerhalb einer Bandbreite von 51 Gew.- % bis 76 Gew.- % und deren die Schmelze ausgleichenden Chromanteile im Bereich von 24 Gew.- % bis 49 Gew.- % liegen können.

2. Verfahren nach Anspruch 1,
**dadurch gekennzeichnet, dass**
der metallische Legierungswerkstoff aus einer Schmelze derselben Zusammensetzung gewonnen wird, wobei diese Schmelze mit geläufigen Aluminiumguss-Verfahren zunächst zu Halbzeugen verarbeitet wird, vorzugsweise zu Blechen, Dünnblechen und Profilen und insbesondere zu Endlos-Bandfolien, und dass ein Weiterverarbeiten dieser Halbzeuge für eine Vielzahl von Anwendungsmöglichkeiten erfolgt, insbesondere das Ausbilden einer Matrix für wenigstens einen Wabenkörper für einen katalytischen Konverter und/oder Diesel-Partikelfilter.

3. Verfahren nach Anspruch 1 und Anspruch 2,
**dadurch gekennzeichnet, dass**
der metallische Legierungswerkstoff zu einer offenen Partikelfilterstruktur ausgeformt wird, die aufgrund der besonders hohen thermischen Wärmeleitfähigkeit des metallischen Legierungswerkstoffs insbesondere für das Beseitigen von Russ-Partikeln aus dem Abgas einer Verbrennungskraftmaschine geeignet ist.

4. Metallischer Legierungswerkstoff, insbesondere Schmelzlegierungswerkstoff,
**gekennzeichnet durch**
einen Legierungselement-Anteil Aluminium von 51 Gew.-% bis 76 Gew.-% und einen Legierungselement-Anteil Chrom von 24 Gew.-% bis 49 Gew.-%, wobei der Legierungselement-Anteil von Aluminium immer über dem Legierungselement-Anteil von Chrom liegt.

5. Metallischer Legierungswerkstoff nach Anspruch 4,
**dadurch gekennzeichnet, dass**
dieser einen Legierungsgrundelement-Anteil Aluminium von 60 Gew.-% und einen Legierungsgrundelement-Anteil Chrom von in etwa 40 Gew.-% aufweist.

6. Verwendung des metallischen Legierungswerkstoffes nach Anspruch 4 und 5,
**dadurch gekennzeichnet, dass**
dieser geeignet ist zur Bildung eines katalytischen Konverters und/oder Diesel-Partikelfilters zur Verwendung im Bereich der katalytischen Reinigung von gasförmigen Schadstoffen sowie Russpartikeln in den Abgasen von Verbrennungskraftmaschinen, insbesondere im Bereich des Fahrzeugbaus.

7. Verwendung des metallischen Legierungswerkstoffes nach Anspruch 4 und 5, im Bereich des Fahrzeugbaus, vorzugsweise zur Herstellung von Motor-Abgaskrümmern, Abgasanlagen, insbesondere Schalldämpfern und Abgasreinigungssystemen für Verbrennungskraftmaschinen, und insbesondere für Reinigungsanwendungen für die Abgase von mit Diesel betriebenen, selbstzündenden Verbrennungskraftmaschinen.

8. Verwendung des metallischen Legierungswerkstoffes nach Anspruch 4 und 5, für Bauteile, vorzugsweise im Bereich des Fahrzeugbaus, die eine dauerhafte Korrosionsbeständigkeit über deren gesamte Lebensdauer erfordern und insbesondere Verwendung in Abgasreinigungssystemen für eine Verbrennungskraftmaschine, als kostengünstigere Alternative zu den herkömmlich eingesetzten Materialien.

9. Verwendung des metallischen Legierungswerkstoffes nach Anspruch 4 und 5, als Leichtbauwerkstoff im Bereich des Fahrzeugbaus, um damit eine Gewichtsreduzierung der daraus hergestellten Bauteile gegenüber den herkömmlich eingesetzten Materialien zu ermöglichen.
